# EUROPÄISCHE PATENTSCHRIFT

(11) **EP 1 490 424 B1**
(45) Veröffentlichungstag und Bekanntmachung des Hinweises auf die Patenterteilung: **04.10.2006**
(21) Anmeldenummer: 03724922.4
(22) Anmeldetag: 19.03.2003
(51) Int. Cl.: C08G 81/02, C04B 24/26

(54) **POLYMERE IN FESTEM AGGREGATZUSTAND**
POLYMERS IN A SOLID STATE
POLYMERES A L'ETAT SOLIDE

(30) Priorität: 25.03.2002 EP 02006760
(43) Veröffentlichungstag der Anmeldung: 29.12.2004
(60) Teilanmeldung: 05110623.5
(73) Patentinhaber: Sika Technology AG, 6340 Baar (CH)
(72) Erfinder: SULSER, Ueli, CH-8102 Oberengstringen (CH); SCHOBER, Irene, CH-8008 Zürich (CH); MÄDER, Urs, CH-8500 Frauenfeld (CH); VELTEN, Ulf, CH-5000 Aarau (CH)
(74) Vertreter: Sika Patent Attorneys
(86) Internationale Anmeldenummer: PCT/EP2003/002892
(87) Internationale Veröffentlichungsnummer: WO 2003/080714

(56) Entgegenhaltungen:
- WO-A-97/00898
- WO-A-99/02466
- DE-A- 4 445 569
- US-A- 5 660 626

## Beschreibung

### Technisches Gebiet

Die Erfindung betrifft die Herstellung von Polymeren in festem Aggregatzustand, welche bei Bedarf rückstandslos in Wasser zu lösen sind und/oder in Wasser dispergierbar sind, sowie Verfahren zu deren Herstellung und Verwendungen.

### Stand der Technik

Polyalkylenglycol-Carboxylate sind seit einigen Jahren als Dispergiermittel für wässrige Dispersionen im Einsatz. Sie ermöglichen drastisch die Reduktion des Wassergehaltes dieser Dispersionen. Diese Polymere werden in wässriger Lösung hergestellt oder fallen als wässrige Polymerlösungen an. Der Nachteil dieser Lösungen sind hohe Transportkosten, da ein hoher Anteil Lösungsmittel mittransportiert werden muss. Weiters kann es, speziell in wässrigen Lösungen, zu Bakterienbefall kommen. Wässrige Lösungen sind frostempfindlich, das heisst, sie können einerseits gefrieren, andererseits kann es unter kühlen Lagerbedingungen zur Auskristallisation von Feststoff kommen. Dies erfordert spezielle Lagerbedingungen. Wässrige Lösungen von Polyalkylenglykol-Carboxylaten haben, wenn sie Estergruppen aufweisen, wie sie beispielsweise durch Copolymerisation von Acrylestern entstanden sind, nur beschränkte Lagerfähigkeit, da diese Ester zur Hydrolyse, speziell bei höheren Temperaturen, neigen.

Pulver, beziehungsweise Feststoffe, haben gegenüber wässrigen Lösungen den technischen Vorteil, dass beim Transport wesentlich geringere Kosten anfallen, die Lagerstabilität wegen geringerem biologischen Befall oder geringerer Spaltung möglicher Esterbindungen in den modifizierten Polycarboxylaten deutlich höher ist und die Frostempfindlichkeit deutlich reduziert wird.

WO 0017263 beschreibt die Herstellung von wasserlöslichen Polymerpulvern auf Basis von Polyoxyalkylenglykol-Carboxylaten durch Trocknung von wässrigen Polymerlösungen unter Zusatz von Stabilisatoren.

EP 1052232 beschreibt die Herstellung eines pulverförmigen Dispergiermittels, wobei der Flüssigkeit, die ein Polycarboxylatpolymer enthält, ein Reduktionsmittel zugesetzt wird und die ein Reduktionsmittel enthaltende Flüssigkeit anschliessend getrocknet und pulverisiert wird.

WO 0047533 beschreibt die Herstellung von pulverförmigen Polymerzusammensetzungen unter Einarbeitung von mineralischem Trägermaterial in ein Polyethercarboxylat.

WO 9700898 beschreibt die Herstellung einer wässrigen Lösung von entschäumenden Verflüssigern, welche ein Polymergerüst aus polymerisierten ethylenisch ungesättigten Carbonsäuren sowie zwei Arten von daran gebundenen entschäumenden Polyoxyalkylen-Seitenketten (a) und (b) aufweisen. Es werden keine festen Polymere beschrieben.

WO 9902466 beschreibt ein Zement-Wasserreduktionsmittel, welches in einem Zweischrittverfahren hergestellt wird. Im ersten Schritt (a) erfolgt zuerst eine Polymerisation von Monomeren mit mindestens einer ethylenisch ungesättigten Gruppe und ein dazu konjugierten Carboxylgruppe in der Gegenwart eines Polyethers zu einem Carboxylsäurepolymer. Im zweiten Schritt (b) wird anschliessend eine Veresterung des Polyethers durchgeführt. Die Herstellung von festen Polymeren wird nicht beschrieben.

Feste Polymere, die durch Trocknung aus Lösungen hergestellt werden, benötigen einen zusätzlichen Verfahrensschritt, verbrauchen viel Energie und sind teuer. Polymerpulver die mit mineralischem Trägermaterial vermischt sind, eigenen sich nicht für die Herstellung von stabilen wässrigen Polymerlösungen nach dem Wiederauflösen.

### Darstellung der Erfindung

Es ist daher die Aufgabe dieser Erfindung, die beschriebenen Nachteile des Standes der Technik zu überwinden, und ein Polymer herzustellen, welches in festem Aggregatzustand anfällt und bei Bedarf rückstandslos in Wasser wieder zu lösen und/oder in Wasser dispergierbar ist, ohne einen Sprühtrocknungsschritt oder wasserunlösliche Zusätze zu benötigen. Unerwartet wurde gefunden, dass die Nachteile des Standes der Technik durch erfindungsgemässe Polymere in festem Zustand gemäss Anspruch 1 behoben werden können.

Die vorliegende Erfindung beschreibt Polymere in festem Aggregatzustand, welche erhältlich sind durch die Reaktion von mindestens einem Polymer **A,** welches hergestellt wird aus mindestens einer ungesättigten Mono- oder Dicarbonsäure oder einem Analogon derselben **(a)** und gegebenenfalls mindestens einem ethylenisch ungesättigten Monomer **(b),** mit mindestens einem Polymer **B,** welches mit unter üblichen Reaktionsbedingungen nicht reaktiven Endgruppen einseitig abgeschlossen ist und am anderen Ende Hydroxy- oder Amin-funktionalisiert ist, und gegebenenfalls mit mindestens einem Amin **C.**

### Weg zur Ausführung der Erfindung

Die vorliegende Erfindung betrifft Polymere in festem Aggregatzustand, welche erhältlich sind durch die Reaktion von mindestens einem Polymer **A,** welches hergestellt ist aus mindestens einem Monomer **a,** welches ausgewählt ist aus ungesättigten Mono- oder Dicarbonsäuren, oder Analoga von ungesättigten Mono- oder Dicarbonsäuren, und gegebenenfalls mindestens einem ethylenisch ungesättigten Monomer **b,** mit mindestens einem Polymer **B,** welches mit unter üblichen Reaktionsbedingungen nicht reaktiven Endgruppen einseitig abgeschlossen ist und am anderen Ende Hydroxy- oder Amin-funktionalisiert ist, und gegebenenfalls mit mindestens einem Amin **C.**

Unter 'festen Polymeren' oder ,Polymeren in festem Aggregatzustand' versteht man im Sinne der Erfindung Polymere, die bei Raumtemperatur im festen Aggregatzustand vorliegen und beispielsweise Pulver, Schuppen, Pellets oder Platten sind und sich in dieser Form problemlos transportieren und lagern lassen.

Unter 'mit unter üblichen Reaktionsbedingungen nicht reaktiven Endgruppen abgeschlossen' versteht man im Sinne der Erfindung, dass anstelle von für die Veresterung oder Amidierung reaktiven funktionellen Gruppen solche Gruppen vorhanden sind, welche nicht mehr zur Reaktion befähigt sind. Die üblichen Reaktionsbedingungen sind diejenigen, welche der Fachmann für Veresterungen und Amidierungen kennt. Bei ,einseitig abgeschlossen' Verbindungen ist nur eine Seite nicht mehr zur Reaktion fähig.

Polymer **A** kann durch Polymerisation von mindestens einem Monomer **a** und gegebenenfalls mindestens einem Monomer **b** erhalten werden.

Monomer **a** ist ausgewählt aus der Gruppe umfassend ungesättigte Monocarbonsäuren, ungesättigte Dicarbonsäuren, Analoga derselben und Mischungen derselben. Ungesättigte Mono- oder Dicarbonsäuren umfassen vorzugsweise Maleinsäure, Itaconsäure, oder Crotonsäure, insbesondere Acrylsäure oder Methacrylsäure. Unter Analogon einer Mono- oder Dicarbonsäure versteht man im Sinne der vorliegenden Erfindung Säuresalze, Säurehalogenide, Säureanhydride und Säureester, im besonderen Alkyl-Säureester.

Monomer **b** ist ausgewählt aus der Gruppe von ethylenisch ungesättigten Monomeren. Solche ethylenisch ungesättigten Monomeren umfassen insbesondere
- ethylenisch ungesättigte Aromaten wie beispielsweise Styrol, alpha-methylStyrol,
- Vinylverbindungen wie beispielsweise N-Vinylpyrrolidon, Vinylacetat, Vinylethylether, Vinylsulfonsäure, Vinylcaprolactam,
- (Meth)allylverbindungen wie beispielsweise (Meth) allylsulfonsäure, Allylglycidylether, Allylpolyglykolether,
- ungesättigte Amide oder Nitrile wie beispielsweise Acrylnitril oder Acrylamid,
- ethylenisch ungesättigte Verbindungen wie beispielsweise Ethylen, Propylen, Butylen, Isobutylen.

Das Polymer **A** kann auch als Salz, oder teilneutralisiert vorliegen.

Bei der Herstellung des Polymers **A** sind allenfalls verwendete Initiatoren, Co-Initiatoren und Polymerisationsregler so zu wählen, dass in Polymer **A** keine reaktionsfähigen Hydroxyl- oder Aminfunktionen vorhanden sind.

Das molare Verhältnis der Monomerbausteine **a** und **b** in Polymer **A** ist üblicherweise im Bereich von 100:0 - 20:80, vorzugsweise 100:0 - 30:70, insbesondere 98:2 - 70:30.

Unter ,Molekulargewicht` oder ,Molgewicht' versteht man im Sinne der Erfindung das Molekulargewichtsmittel M_{w}.

Das Molgewicht des Polymers **A** ist beispielsweise 1'000-100'000 g/mol, vorzugsweise 1'000-50'000 g/mol, besonders bevorzugt 2'000-30'000 g/mol, insbesondere 2'000-15'000 g/mol.

Polymer **B,** ist mit unter üblichen Reaktionsbedingungen nicht reaktiven Endgruppen einseitig abgeschlossen. Beim Polymer **B** handelt es sich um ein Polymer mit einem Polyalkylenglykol-Grundgerüst der Formel

X-(EO)ₓ-(PO)_{y}-(BuO)_{z}-R

wobei x, y, z unabhängig voneinander je die Werte 0 - 250 aufweisen und x+y+z = 3 oder grösser ist;
X=OH oder NHR', mit R'=Alkyl mit 1-20 Kohlenstoffatomen, Alkylaryl mit 7-20 Kohlenstoffatomen oder H, vorzugsweise R'=H;
EO=Ethylenoxy, PO=Propylenoxy, BuO=Butylenoxy oder lsobutylenoxy:
und R= Alkyl mit 1-20 Kohlenstoffatomen oder Alkylaryl mit 7-20 Kohlenstoffatomen
bedeuten.

Die Reihenfolge der Ethylenoxid(EO)-, Propyleneoxid(PO)- und Butylenoxid(BuO)-Einheiten in Polymer **B** kann blockweise und/oder statistisch verteilt sein.

Das molare Verhältnis von Polymeren **B** die Hydroxyl-Endgruppen enthalten zu Polymeren **B** die Amin-Endgruppen enthalten, ist 100:0 bis 0:100, vorzugsweise 100:0 bis 5:95 , insbesondere 100:0 bis 20:80, besonders 100:0 bis 91:9.

In der Herstellung des festen Polymers sind die Amine **C** ausgewählt aus Ammoniak, Ammoniumsalzen, primären, sekundären linearen und verzweigten C1-C20 Alkylaminen sowie sekundären C1-C20 Hydroxyaminen.

Das Verhältnis der Summe der Carbonsäuregruppen oder deren Analoga in Polymer **A** zu der Summe der Hydroxy- und Amino-Gruppen in den Polymeren **B ist** 50:1 bis 1.1:1, bevorzugt 30:1 bis 1.1:1.

Pro Carbonsäuregruppe oder deren Analoga in Polymer **A** werden für die Herstellung des festen Polymers 0-0.5 Einheiten, vorzugsweise 0.01-0.3 Einheiten, Amin **C** eingesetzt.

Die Reaktion von Polymeren **A** mit Polymeren **B** und gegebenenfalls Aminen **C** wird unter Bedingungen durchgeführt, die zumindest zu teilweiser Veresterung beziehungsweise Amidierung der Carboxylat-Gruppen in Polymer **A** führen. Die Reaktion wird vorzugsweise bei höherer Temperatur durchgeführt, besonders bevorzugt zwischen 140 und 250°C, insbesondere zwischen 150 und 200°C. Veresterungskatalysatoren wie beispielsweise Lewis Säuren können zugegeben werden. Entstehende Nebenprodukte können während der Reaktion aus der Polymerschmelze entfernt werden, zum Beispiel durch Luft- oder Stickstoffstrom, Vakuum oder Salzausfällung.

Der Gewichtsanteil der Summe von Propyleneoxid (PO)- und Butylenoxid(BuO)- Einheiten ist kleiner als 20 Gewichts-% des Polymeren **B.**

Das Molekulargewicht des Polymers **B** ist etwa 120-20'000 g/mol, insbesondere etwa 250-10'000 g/mol.

Der Anteil von allen Polymeren **B** mit Molekulargewichten unter 500g/mol beträgt kleiner als 50 Mol-% aller Polymere **B,** insbesondere kleiner als 30 Mol-%.

Es ist dem Fachmann bekannt, dass technisch hergestellte monofunktionelle Polyalkyleneoxide, d.h. mit unter üblichen Reaktionsbedingungen nicht reaktiven Endgruppen einseitig abgeschlossene Polyalkylendiole, immer einen gewissen Anteil an Verunreinigungen aufweisen, welche nicht mit Endgruppen abgeschlossen sind. Insbesondere sind dies solche die vom Fachmann mit dem Term ,Difunktionalität` berücksichtigt werden. Der Gewichtsanteil von difunktionellen Polymeren in Polymer **B** beträgt vorteilhaft weniger als 3 Gewichts-%, vorzugsweise weniger als 2 Gewichts-%, insbesondere weniger als 1 Gewichts-%, bezogen auf das Gewicht des Polymeren **B.**

Es hat sich gezeigt, dass die Zugabe gewisser wasserlöslicher oder wasserdispergierbarer Stoffe die Erhärtungsreaktion der Polymerschmelze beschleunigen kann. Beispiele für solche Stoffe sind organische oder anorganische Salze wie beispielsweise Alkali- oder Erdalkalisalze von Salpetersäure, Phosphorsäure, Phosphoriger Säure, Fettsäuren, Sulfonsäuren, Phthalsäure oder organische Verbindungen wie beispielsweise Harnstoff, höhere Alkohole wie beispielsweise Fettalkohole oder Neopentylglykol. Diese Zusätze können zu jedem Zeitpunkt vor dem Verarbeiten der Polymerschmelze zugegeben werden.

Diese Zusätze werden dem Polymer, vorzugsweise der Schmelze, in 0 bis 5 Gewichts-% bezogen auf das Polymer in festem Aggregatzustand zugegeben.

Unter ,vor dem Verarbeiten der Polymerschmelze' ist jeder Arbeitsschritt bei der Polymerherstellung gemeint, der vor dem Erstarren der Polymerschmelze erfolgt.

Die am Ende der Reaktion im Reaktor vorliegende Polymerschmelze kann in Gefässe abgefüllt werden um dort zu erstarren. Diese festen Polymere können zur Weiterverarbeitung wieder aufgeschmolzen werden und dann weiterverarbeitet werden.

Die am Ende der Reaktion im Reaktor vorliegende Polymerschmelze kann aber auch kontinuierlich oder portionsweise mit dem Fachmann bekannten und geeigneten Mitteln zur Konfektionierung von handhabbaren Feststoffen weiterverarbeitet werden. Beispielsweise kann sie in Platten gegossen werden und, in dieser Form erstarrt, anschliessend zerkleinert werden, beispielsweise durch Zerhacken, Mahlen oder Pellettieren. Der Erstarrungsvorgang kann beispielsweise durch Kühlen beschleunigt werden. Als weiteres Beispiel für eine Weiterverarbitung der Polymerschmelze kann die Polymerschmelze auch direkt granuliert werden, zum Beispiel mittels eines Kühlbades und eines Zerhackers.

In einer bevorzugten Ausführungsform der Erfindung können die festen Polymere als Dispergiermittel für anorganische oder organische Dispersionen verwendet werden. Beispiele für solche Dispersionen sind Calcium-Carbonatdispersionen, Farbstoffdispersionen, Gipsaufschlämmungen, Dispersionen hydraulischer Bindemittel oder Kohleschlämme.

In einer weiter bevorzugten Ausführungsform können die festen Polymere als Dispergiermittel für Dispersionen, die hydraulisch abbindende Bindemittel oder Mischungen von hydraulisch abbindenen mit latent hydraulischen Bindemitteln enthalten, verwendet werden. Solche Dispergiermittel werden in der Betontechnologie als Verflüssiger bezeichnet. Hydraulisch abbindenden Bindemittel sind beispielsweise Zement, Schlacken, Gips oder Anhydrit. Unter latent hydraulisch abbindenen Massen versteht man beispielsweise Puzzolane oder Flugasche. Eine spezielle Verwendung stellt hierbei die Verwendung als Verflüssiger in Fertigmörteln dar.

Die erfindungsgemässen Polymeren in festem Aggregatzustand können direkt eingesetzt werden, indem man sie beispielsweise als Pulver oder Pellets den zu dispergierenden Stoffen beimischt oder falls die zu dispergierenden Stoffe gemahlen werden müssen, können diesen gegebenenfalls vor dem Mahlvorgang zugesetzt werden. Die festen Polymeren können aber auch in Wasser gelöst als wässrige Lösungen eingesetzt werden.

Dem festen Polymer, vorzugsweise vor dem Verarbeiten der Polymerschmelze, können noch andere Zusatzstoffe beigegeben werden. Solche Zusatzstoffe können beispielsweise Alkalien, wie beispielsweise Alkali- oder Erdalkalihydroxide, Ammoniak, C1-C2 Alkylamine sein, andere Dispergiermittel, wie beispielsweise sulfonierte Naphthalinkondensate, sulfonierte Melaminkondensate, Lignosulfonate, Polyacrylate, andere Polycarboxylate oder Abbinderverzögerer und/oder Abbindebeschleuniger für hydraulisch abbindende Bindemittel, Viskositätsmodifizierer, oberflächenaktive Substanzen wie Tenside oder Entschäumer, oder Schwindreduzierer sein.

### Beispiele

### Herstellvorschrift durch Umsetzung von Polymer A mit Polymer B (Beispiele PA-1 bis PA-5)

### Herstellvorschrift für erfindungsgemässes Polymer PA-1

In einen Rundkolben mit mechanischem Rührer, Thermometer, Gaseinleitrohr und Destillationsbrücke werden 160 g einer 50-prozentigen wässrigen Lösung von Polyacrylsäure (Molekulargewicht 4500) und 5,0 g einer 50-prozentigen Schwefelsäure vorgelegt. Die Mischung wird auf 50°C erwärmt und 400 g Polyethyleneglykol-Monomethylether (Molekulargewicht 2000) zugegeben. Die Reaktionsmischung wird unter N2-Strom auf 160°C erwärmt. Das in der Mischung enthaltene Wasser sowie das Reaktionswasser werden kontinuierlich unter N2-Strom abdestilliert. Nach vier Stunden ist eine Säurezahl von 1.5 mmol H+/g erreicht und die Polymerschmelze wird in Aluschalen von ca. 100 mm Durchmesser und ca. 7 mm Höhe, die auf nicht beheizten Keramikplatten eines Labortisches stehen, gegossen und erstarren gelassen.

Polymere PA-2 bis PA-5 wurden in gleicher Weise wie Polymer PA-1 hergestellt mit den in Tabelle a angegebenen Ausgangsstoffen und Reaktionszeiten.

### Herstellvorschrift für Vergleichspolymere VA-1 und VA-2

Die Vergleichspolymeren VA-1 und VA-2 wurden in gleicher Weise wie Polymer PA-1 hergestellt mit den in Tabelle b angegebenen Ausgangsstoffen und Reaktionszeiten

**Tabelle a: Herstellung der erfindungsgemässen Polymere PA-2 bis PA-5**

| Polymer | Polycarbonsäure-Lösung in H₂O (Polymer A) | Einsatzmenge (g) | Polyalkylenglykol (Polymer B) | Einsatzmenge (g) | Schwefelsäure 50%ig (g) | Reaktionszeit bei 160°C (Stunden) | Säurezahl (mmol H⁺/g) |
|---|---|---|---|---|---|---|---|
| PA-2 | Polyacrylsäure mit M_{w}= 4500 g/mol , 50% in H₂O | 160 | Methoxypolyethyleneglykol mit M_{w}=3000 g/mol | 600 | 6.0 | 5 | 1.00 |
| PA-3 | Copolymer von Methacrylsäure mit Acrylsäure im Molverhältnis 3:1 mit M_{W}= 4500 g/mol, 40%ig in H₂O | 230 | Methoxypolyethyleneglykol mit M_{w} =2000 g/mol | 440 | 3.0 | 3 | 1.05 |
| PA-4 | Polymethacrylsäure mit M_{w} = 4100 g/mol, 40% in Wasser | 245 | Methoxypolyethyleneglykol mit M_{w}=2000 g/mol | 400 | 2.0 | 3.5 | 0.80 |
| PA-5 | Copolymer von Methacrylsäure mit Acrylsäure im Molverhältnis 3:1 mit M_{w}=4500 g/mol 40% in H₂O | 230 | Methoxypolyethyleneglykol mit M_{w}=2000 g/mol und Methylpolyethylenglycolamin mit M_{w} = 520 g/mol | 300 und 60 | 2.0 | 2.5 | 1.10 |

**Tabelle b: Herstellung der Vergleichspolymere VA-1 und VA-2**

| Polymer | Polycarbonsäure-Lösung in H₂O (Polymer A) | Einsatz menge (g) | Poly-alkylenglykol (Polymer B) | Einsatz menge (g) | Schwefelsäure 50%ig (g) | Reaktionszeit bei 160°C (Stunden) | Säurezahl (mmol H⁺/g) |
|---|---|---|---|---|---|---|---|
| VA-1 | Copolymer von Methacrylsäure mit Acrylsäure im Molverhältnis 3:1 mit M_{w} =4500 g/mol, 40%ig in H₂O | 230 | Methoxypolyethyleneglykol mit M_{w} =350 g/mol | 175 | 1.5 | 1.5 | 1.50 |
| VA-2 | Polyacrylsäure mit M_{w} =7000 g/mol, 54%ig in H₂O | 155 | Methoxypolyethyleneoxidpolypropylenoxid-amin mit EO/PO Verhältnis von 70/30 mit M_{w} =2000 g/mol | 400 | 1.0 | 2.5 | 1.60 |

Die Polymeren PA1-PA5 konnten nach dem Auskühlen und Erstarren problemlos als Platten von den Schalen abgelöst und in kleine, nicht verklebende Stücke zerkleinert werden.

Die Vergleichspolymere VA-1 und VA-2 blieben auch nach 24 Stunden bei Raumtemperatur sowie auch nach 24 Stunden bei 6°C zähviskos und klebrig.

### Beispiel für den Einsatz von Calciumhydroxid als Beschleuniger für die Erstarrungsreaktion der Polymerschmelze

Die Herstellung von Polymer PA-1 wird in gleicher Ansatzgrösse wiederholt. Die Polymerschmelze wird auf 100°C gekühlt und es werden 2 Gewichtsprozent Calciumhydroxid-Pulver zugegeben und 5 Minuten gut eingemischt. Anschliessend wird die Polymerschmelze auf ein Blech ausgegossen und erstarren gelassen. Die Härte der festen Polymeren wurde mit Hilfe des Härteprüfgerätes nach Shore A, DIN 53505 geprüft. Das Erstarren mit Zusatz von Calciumhydroxid-Puver erfolgte deutlich schneller als ohne, wie in Tabelle c gezeigt.

**Tabelle c: Erstarrungsgeschwindigkeit der Polymerschmelzen PA-1 mit und ohne Calciumhydroxid-Zugabe (Labortemperatur = 23°C).**

| Härte Shore A nach: | | | | | | | |
|---|---|---|---|---|---|---|---|
| | 5 min. | 10 min. | 15 min. | 30 min. | 60 min. | 90 min. | 120 min. |
| **ohne** Ca(OH)2 | weich, n.m.^{‡} | weich, n.m.^{‡} | weich, n.m.^{‡} | weich, n.m.^{‡} | 55 | 59 | 60 |
| **mit** Ca(OH)2 n.m.^{‡} | weich, | Oberfläche hart abernoch n.m.^{‡} | 56 | 59 | 62 | 62 | 64 |

| | | | | | | | |
|---|---|---|---|---|---|---|---|
| ^{‡} n.m. = "nicht messbar" | | | | | | | |

Wie aus Tabelle c ersichtlich ist, wird durch Zugabe von Calciumhydroxid bereits nach 15 Minuten eine Festigkeit des Polymeren erreicht, die ohne Zugabe erst nach 60 Minuten erreicht ist.

### Beispiel für die Herstellung von wässrigen Polymerlösungen aus den festen Polymeren

30 g festes Polymer PA-1 werden in 70 g Wasser gelöst. Es wird eine klare, gelbliche Polymerlösung erhalten.

30 g festes Polymer PA-1, das unter Zusatz von 2 Gewichtsprozent Calciumhydroxid-Pulver erstarren gelassen wurde, werden in 70 g Wasser gelöst. Es wird eine trübe, gelbliche Polymerlösung erhalten.

## Patentansprüche

1. Polymer in festem Aggregatzustand erhältlich durch die Reaktion von mindestens einem **Polymer A,** hergestellt aus
- mindestens einem Monomer **a** ausgewählt aus ungesättigten Mono- oder Dicarbonsäuren oder Analoga von ungesättigten Mono- oder Dicarbonsäuren,
und
- gegebenenfalls mindestens einem ethylenisch ungesättigten Monomer **b,**
mit mindestens einem Polymer **B,** welches mit unter üblichen Reaktionsbedingungen nicht reaktiven Endgruppen einseitig abgeschlossen ist und am anderen Ende Hydroxy- oder Amin-funktionalisiert ist,
und gegebenenfalls mindestens einem Amin **C;**
wobei das Polymer **B** die folgende Formel besitzt:
X-(EO)ₓ-(PO)_{y}-(BuO)_{z}-R
wobei x, y, z unabhängig voneinander je die Werte 0 - 250 aufweisen und x+y+z = 3 oder grösser ist;
X=OH oder NHR', mit R'=Alkyl mit 1-20 Kohlenstoffatomen, Alkylaryl mit 7-20 Kohlenstoffatomen oder H, vorzugsweise R'=H;
EO=Ethylenoxy, PO=Propylenoxy, BuO=Butylenoxy oder lsobutylenoxy;
und R= Alkyl mit 1-20 Kohlenstoffatomen oder Alkylaryl mit 7-20 Kohlenstoffatomen
bedeuten;
wobei der Gewichtsanteil der Summe von Propyleneoxid (PO)- und Butylenoxid(BuO)- Einheiten kleiner als 20 Gewichts-% des Polymeren **B ist;**
wobei das Molekulargewicht des Polymers **B** etwa 120-20'000 g/mol, insbesondere etwa 250-10'000 g/mol, ist;
und wobei der Anteil von allen Polymeren **B** mit Molekulargewichten unter 500g/mol kleiner als 50 Mol-% aller Polymere **B** beträgt, insbesondere kleiner als 30 Mol-% beträgt.

2. Polymer in festem Aggregatzustand gemäss Anspruch 1, **dadurch gekennzeichnet, dass** das Analogon der ungesättigten Mono- oder Dicarbonsäure ausgewählt ist aus der Gruppe Säuresalze, Säurehalogenide, Säureanhydride und Säureester.

3. Polymer in festem Aggregatzustand gemäss einem der vorhergehenden Ansprüche, **dadurch gekennzeichnet, dass** das Polymer **B** Verunreinigungen von difunktionellen Polymeren im Gewichtsanteil von weniger als 3 Gewichts-% enthält, vorzugsweise weniger als 2 Gewichts-%, insbesondere weniger als 1 Gewichts-%, bezogen auf das Gewicht des Polymeren **B.**

4. Polymer in festem Aggregatzustand gemäss einem der vorhergehenden Ansprüche, **dadurch gekennzeichnet, dass** Monomer **a** Maleinsäure, Itaconsäure, oder Crotonsäure ist, vorzugsweise Acrylsäure oder Methacrylsäure.

5. Polymer in festem Aggregatzustand gemäss einem der vorhergehenden Ansprüche, **dadurch gekennzeichnet, dass** das Polymer **A** ein Molekulargewicht im Bereich von 1'000 - 100'000 g/mol, vorzugsweise 1'000 - 50'000 g/mol, besonders bevorzugt 2'000-30'000 g/mol, insbesondere 2'000 - 15'000 g/mol aufweist.

6. Polymer in festem Aggregatzustand gemäss einem der vorhergehenden Ansprüche, **dadurch gekennzeichnet, dass** im Polymer **A** das molare Verhältnis der Monomerbausteine **a** und **b** im Bereich von 100:0 - 20:80 ist, vorzugsweise 100:0 - 30:70, insbesondere 98:2 - 70:30.

7. Polymer in festem Aggregatzustand gemäss einem der vorhergehenden Ansprüche, **dadurch gekennzeichnet, dass** das Polymer in festem Aggregatzustand als Pulver, Schuppen oder in Platten vorliegt.

8. Polymer in festem Aggregatzustand gemäss einem der vorhergehenden Ansprüche, **dadurch gekennzeichnet, dass** dem Polymer vor dem Erstarren mindestens ein Betonverflüssiger zugesetzt wird.

9. Polymer in festem Aggregatzustand gemäss einem der vorhergehenden Ansprüche, **dadurch gekennzeichnet, dass** dem Polymer vor dem Erstarren mindestens ein Zusatz für hydraulisch oder latent hydraulisch abbindende Bindemittel aus der Gruppe der Abbindeverzögerer, Abbindebeschleuniger, Viskositätsmodifizierer und Schwindreduzierer zugesetzt wird.

10. Verfahren zur Herstellung eines Polymers in festem Aggregatzustand gemäss einem der Ansprüche 1 - 9, **dadurch gekennzeichnet, dass** das Polymer in festem Aggregatzustand durch Abkühlung einer Polymerschmelze anfällt und gegebenenfalls in eine transportierbare Form zerkleinert wird.

11. Verfahren zur Herstellung eines Polymers in festem Aggregatzustand gemäss Anspruch 10, **dadurch gekennzeichnet, dass** der Polymerschmelze vor dem Erkalten wasserlösliche oder wasserdispergierbare Beschleuniger für die Erhärtungsreaktion der Polymerschmelze zugesetzt werden.

12. Verfahren zur Herstellung eines Polymers in festem Aggregatzustand gemäss Anspruch 11, **dadurch gekennzeichnet, dass** als wasserlösliche oder wasserdisperigierbare Beschleuniger für die Erhärtungsreaktion der Polymerschmelze Beschleuniger eingesetzt werden ausgewählt aus der Gruppe umfassend anorganische, organische Salze, Harnstoff und höhere Alkohole.

13. Verwendung des Polymers in festem Aggregatzustand gemäss einem der Ansprüche 1-9 als Dispergiermittel für wässrige Dispersionen.

14. Verwendung des Polymers in festem Aggregatzustand gemäss einem der Ansprüche 1-9 als Verflüssiger für hydraulisch abbindende Systeme.

15. Verwendung des Polymers in festem Aggregatzustand gemäss einem der Ansprüche 1-9 als Verflüssiger in Fertigmörtel Systeme.

16. Verwendung des Polymers in festem Aggregatzustand gemäss einem der Ansprüche 1-9 in Wasser gelöst als Verflüssiger für zementhaltige Systeme.

17. Wässrige Lösung, erhalten durch Auflösen des Polymers in festem Aggregatzustand gemäss einem der Ansprüche 1-9 in Wasser.

## Claims

1. Polymer in the solid state obtainable by reaction of at least one polymer **A** prepared from
- at least one monomer **a** selected from among unsaturated monocarboxylic or dicarboxylic acids or analogs of unsaturated monocarboxylic or dicarboxylic acids,
and
- optionally, at least one ethylenically unsaturated monomer **b,**
with at least one polymer **B** which is terminated at one end by end groups which are not reactive under customary reaction conditions and is hydroxy- or amine-functionalized at the other end,
and, optionally, at least one amine **C,**
with the polymer **B** having the following formula:
X-(EO)ₓ-(PO)_{y}-(BuO)_{z}-R
where x, y, z are each, independently of one another, in the range 0-250 and x+y+z=3 or above;
X=OH or NHR', where R'=alkyl having 1-20 carbon atoms, alkylaryl having 7-20 carbon atoms or H, preferably R'=H;
EO=ethyleneoxy, PO=propyleneoxy, BuO=butyleneoxy or isobutyleneoxy;
and R=alkyl having 1-20 carbon atoms or alkylaryl having 7-20 carbon atoms,
with the proportion by weight of the sum of propylene oxide (PO) and butylene oxide (BuO) units being less than 20% by weight of the polymer **B;**
the molecular weight of the polymer **B** being about 120-20 000 g/mol, in particular about 250-10 000 g/mol;
and the proportion of all polymers **B** having molecular weights of less than 500 g/mol being less than 50 mol% of all polymers **B,** in particular less than 30 mol%.

2. Polymer in the solid state according to Claim 1, **characterized in that** the analogue of the unsaturated monocarboxylic or dicarboxylic acid is selected from the group consisting of acid salts, acid halides, acid anhydrides and acid esters.

3. Polymer in the solid state according to any of the preceding claims, **characterized in that** the polymer **B** contains bifunctional polymer impurities in a proportion by weight of less than 3% by weight, preferably less than 2% by weight, in particular less than 1% by weight, based on the weight of the polymer **B.**

4. Polymer in the solid state according to any of the preceding claims, **characterized in that** monomer **a** is maleic acid, itaconic acid or crotonic acid, preferably acrylic acid or methacrylic acid.

5. Polymer in the solid state according to any of the preceding claims, **characterized in that** the polymer **A** has a molecular weight in the range 1000-100 000 g/mol, preferably 1000-50 000 g/mol, particularly preferably 2000-30 000 g/mol, in particular 2000-15 000 g/mol.

6. Polymer in the solid state according to any of the preceding claims, **characterized in that** the molar ratio of the monomer building blocks **a** and **b** in the polymer **A** is in the range 100:0-20:80, preferably 100:0-30:70, in particular 98:2-70:30.

7. Polymer in the solid state according to any of the preceding claims, **characterized in that** the polymer in the solid state is in the form of powder, flakes or in sheets.

8. Polymer in the solid state according to any of the preceding claims, **characterized in that** at least one concrete plasticizer is added to the polymer prior to solidification.

9. Polymer in the solid state according to any of the preceding claims, **characterized in that** at least one additive for hydraulically or latently hydraulically setting binders from the group consisting of setting retarders, setting accelerators, viscosity modifiers and shrinkage reducers is added to the polymer prior to solidification.

10. Process for preparing a polymer in the solid state according to any of claims 1-9, **characterized in that** the polymer in the solid state is obtained by cooling a polymer melt and is, optionally, comminuted to give a transportable form.

11. Process for preparing a polymer in the solid state according to claim 10, **characterized in that** water-soluble or water-dispersible accelerators for the curing reaction of the polymer melt are added to the polymer melt prior to cooling.

12. Process for preparing a polymer in the solid state according to claim 11, **characterized in that** accelerators selected from the group consisting of inorganic and organic salts, urea and higher alcohols are used as water-soluble or water-dispersible accelerators for the solidification reaction of the polymer melt.

13. Use of the polymer in the solid state according to any of claims 1-9 as dispersant for aqueous dispersions.

14. Use of the polymer in the solid state according to any of claims 1-9 as plasticizer for hydraulically setting systems.

15. Use of the polymer in the solid state according to any of claims 1-9 as plasticizer in ready-to-use mortar systems.

16. Use of the polymer in the solid state according to any of claims 1-9 dissolved in water as plasticizer for cement-containing systems.

17. Aqueous solution obtained by dissolving the polymer in the solid state according to any of claims 1-9 in water.

## Revendications

1. Polymère à l'état solide pouvant être obtenu par la réaction d'au moins un polymère **A,** produit à partir de :
- au moins un monomère **a** sélectionné dans le groupe comprenant les acides monocarboxyliques ou dicarboxyliques insaturés, ou des équivalents aux acides monocarboxyliques ou dicarboxyliques insaturés,
et
- éventuellement au moins un monomère éthyléniquement insaturé **b,**
avec au moins un polymère **B** qui, avec des groupes terminaux non réactifs dans des conditions réactionnelles normales, est fermé d'un seul côté et est fonctionnalisé hydroxy ou amine à l'autre côté,
et éventuellement au moins une amine **C;**
dans lequel le polymère **B** possède la formule suivante :
X-(EO)ₓ-(PO)_{y}-(BuO)_{z}-R
où x, y, z présentent chacun indépendamment les uns des autres les valeurs de 0 à 250, et x + y + z = 3 ou plus;
X = OH ou NHR', avec R' = alkyle avec 1 à 20 atomes de carbone, alkylaryle avec 7 à 20 atomes de carbone, ou H, de préférence R' = H;
EO = éthylèneoxy, PO = propylèneoxy,
BuO = butylèneoxy ou isobutylèneoxy;
et R = alkyle avec 1 à 20 atomes de carbone ou alkylaryle avec 7 à 20 atomes de carbone;
où la proportion en poids de la somme des unités d'oxyde de propylène (PO) et d'oxyde de butylène (BuO) est inférieure à 20% en poids du polymère **B;**
où le poids moléculaire du polymère **B** est d'environ 120 à 20 000 g/mole, en particulier d'environ 250 à 10 000 g/mole;
et où la proportion de tous les polymères **B** avec des poids moléculaires inférieurs à 500 g/mole est inférieure à 50% en moles de tous les polymères **B,** en particulier inférieure à 30% en moles.

2. Polymère à l'état solide selon la revendication 1, **caractérisé en ce que** l'équivalent de l'acide monocarboxylique ou de l'acide dicarboxylique insaturé est sélectionné dans le groupe constitué de sels d'acide, d'halogénures d'acide, d'anhydrides d'acide et d'esters d'acide.

3. Polymère à l'état solide selon l'une quelconque des revendications précédentes, **caractérisé en ce que** le polymère **B** contient des impuretés provenant de polymères bifonctionnels dans une proportion en poids de moins de 3% en poids, de préférence de moins de 2% en poids, en particulier de moins de 1% en poids, par rapport au poids du polymère **B.**

4. Polymère à l'état solide selon l'une quelconque des revendications précédentes, **caractérisé en ce que** le monomère **a** est de l'acide maléique, de l'acide itaconique, ou de l'acide crotonique, de préférence de l'acide acrylique ou de l'acide méthacrylique.

5. Polymère à l'état solide selon l'une quelconque des revendications précédentes, **caractérisé en ce que** le polymère **A** présente un poids moléculaire situé dans la plage de 1 000 à 100 000 g/mole, de préférence de 1 000 à 50 000 g/mole, de manière particulièrement préférée de 2 000 à 30 000 g/mole, en particulier de 2 000 à 15 000 g/mole.

6. Polymère à l'état solide selon l'une quelconque des revendications précédentes, **caractérisé en ce que**, dans le polymère **A,** le rapport molaire des éléments structuraux monomères **a** et **b** se situe dans la plage de 100:0 à 20:80, de préférence de 100:0 à 30:70, en particulier de 98:2 à 70:30.

7. Polymère à l'état solide selon l'une quelconque des revendications précédentes, **caractérisé en ce que** le polymère à l'état solide se présente sous la forme de poudre, de flocons ou en plaques.

8. Polymère à l'état solide selon l'une quelconque des revendications précédentes, **caractérisé en ce que** le polymère est additionné d'au moins un agent plastifiant pour béton avant solidification.

9. Polymère à l'état solide selon l'une quelconque des revendications précédentes, **caractérisé en ce que** le polymère est additionné, avant solidification, d'au moins un additif pour liant hydraulique ou liant hydraulique latent de prise, sélectionné dans le groupe comprenant agent retardateur de prise, agent accélérateur de prise, agent modificateur de viscosité et agent réducteur de retrait.

10. Procédé de fabrication d'un polymère à l'état solide selon l'une quelconque des revendications 1 à 9, **caractérisé en ce que** le polymère à l'état solide est produit par refroidissement d'une masse fondue polymère, et est éventuellement broyé sous une forme transportable.

11. Procédé de fabrication d'un polymère à l'état solide selon la revendication 10, **caractérisé en ce que** la masse fondue polymère est additionnée, avant refroidissement, d'agents accélérateurs hydrosolubles
ou hydrodispersibles pour la réaction de durcissement de la masse fondue polymère.

12. Procédé de fabrication d'un polymère à l'état solide selon la revendication 11, **caractérisé en ce que**, en tant qu'agents accélérateurs hydrosolubles ou hydrodispersibles pour la réaction de durcissement de la masse fondue polymère, des agents accélérateurs sont utilisés, sélectionnés dans le groupe constitué de sels inorganiques, de sels organiques, d'urée, et d'alcools supérieurs.

13. Utilisation du polymère à l'état solide selon l'une quelconque des revendications 1 à 9, en tant qu'agent dispersant pour des dispersions aqueuses.

14. Utilisation du polymère à l'état solide selon l'une quelconque des revendications 1 à 9, en tant qu'agent plastifiant pour des systèmes à prise hydraulique.

15. Utilisation du polymère à l'état solide selon l'une quelconque des revendications 1 à 9, en tant qu'agent plastifiant dans des systèmes de mortier prémélangé.

16. Utilisation du polymère à l'état solide selon l'une quelconque des revendications 1 à 9, dilué dans l'eau en tant qu'agent plastifiant pour des systèmes contenant du ciment.

17. Solution aqueuse, obtenue par dissolution du polymère à l'état solide selon l'une quelconque des revendications 1 à 9 dans de l'eau.
